# EUROPEAN PATENT SPECIFICATION

(11) **EP 3 278 291 B1**
(45) Date of publication and mention of the grant of the patent: **08.05.2024**
(21) Application number: 16715973.0
(22) Date of filing: 31.03.2016
(51) Int. Cl.: G06Q 30/02, G06Q 10/06, G06Q 50/00, G06N 20/00

(54) **INFERRING USER SLEEP PATTERNS**
ABLEITUNG VON BENUTZERSCHLAFMUSTERN
INFÉRENCE DE STRUCTURES DE SOMMEIL D'UTILISATEURS

(30) Priority: 31.03.2015 US 201514675390
(43) Date of publication of application: 07.02.2018
(73) Proprietor: Microsoft Technology Licensing, LLC, Redmond, WA 98052-6399 (US)
(72) Inventor: WEINBERG, Shira, Redmond, WA 98052 (US); COHN, Ido, Redmond, WA 98052 (US); PRINESS, Ido, Redmon, WA 98052 (US)
(74) Representative: Goddar, Heinz J.
(86) International application number: PCT/US2016/025199
(87) International publication number: WO 2016/161078

(56) References cited:
- US-A1- 2014 128 105

## Description

### BACKGROUND OF THE INVENTION

Many services are not familiar with some aspects of a user's routine, such as the user's sleep schedule. Such services may provide time-sensitive recommendations, functions or other utilities by associating fixed time ranges with a day's various time periods (e.g. morning, afternoon, and evening). Some users having routines that conform to these fixed ranges of time may find these generic time-sensitive recommendations, functions, or other utilities helpful. However, users with routines that do not conform to these fixed ranges of time may not derive as much utility as they otherwise would from services that are personalized to the user's routine.

A service providing morning traffic update recommendations to help users reduce their work commute times is an example of one such time-sensitive recommendation. If the service in this example associates the fixed time range of 5:00 A.M.to 10:00 A.M. with the morning time period, a user that works as an accountant between 9:00 A.M.to 5:00 P.M. may find such generic time-sensitive recommendations helpful since the user's routine conforms with this fixed time range. Whereas, a user working as a bartender between 8:00 P.M.to 3:00 A.M. may not find the generic time-sensitive recommendations provided by the service in this example as helpful. Both users in this example may derive more utility from the service if the time-sensitive recommendations are personalized according to each user's respective routine.

US 2014/0128105 A1 discloses an activity recognition system that receives device data collected from a mobile device and determines a first set of user activities based on the device data. Based on the first set of user activities and further available device data, a second set of likely future user activities is determined. The activity recognition system is implemented as an ecosystem.

### SUMMARY OF THE INVENTION

The invention is defined by the independent claims. Preferred embodiments are recited by the dependent claims.

In the following, some embodiments of the specification not according to the claimed invention but useful for understanding the invention are directed towards systems and methods for inferring aspects of a user's sleep pattern based at least in part on sensor data indicative of interactions between the user and devices or services ("interaction data"). In particular, some embodiments may populate an interaction dataset using observed interaction data. The interaction dataset may be used to train user sleep models that identify one or more sleep-related features derived from at least one source of interaction data. In some embodiments, sleep-related features are generated from one or more of: current interaction data based in part on user data received from one or more sensors, descriptive information associated with interaction data (e.g. information regarding data source location, time/date stamp information, session ID, etc.), interpretive data determined from interaction data and/or descriptive information providing context to interaction data, or a combination thereof. User sleep models include sleep-related logic that determines how the one or more sleep-related features may be used to infer aspects of the user's sleep pattern. In some embodiments, sleep-related weightings are assigned to particular sleep-related feature's based on that particular sleep-feature's relative significance in determining (e.g. predicting the likelihood of) the sleep-related inference. Aspects of the user's sleep pattern may thereby be inferred by applying sleep-related features generated from current interaction data to user models generated from observed interaction data. Inferred aspects of the user's sleep pattern are then used to provide time-sensitive recommendations that are personalized to specific user's sleep pattern.

### BRIEF DESCRIPTION OF THE DRAWING

Aspects of the invention are described in detail below with reference to the attached drawing figures, wherein:
FIG. 1 is a block diagram of an example operating environment suitable for implementing aspects of the invention;
FIG. 2 is a diagram depicting an example computing architecture suitable for implementing aspects of the invention;
FIGS. 3-5 depict flow diagrams of methods for providing time-sensitive recommendations personalized for a user's sleeping pattern using sleep-related aspects inferred using sensor data reflecting user activity, in accordance with embodiments; and
FIG. 6 is a block diagram of an exemplary computing environment suitable for use in implementing an embodiment of the invention.

### DETAILED DESCRIPTION OF THE INVENTION

Although the terms "step" and/or "block" may be used herein to connote different elements of methods employed, the terms should not be interpreted as implying any particular order among or between various steps herein disclosed unless and except when the order of individual steps is explicitly described.

Various aspects of the technology described herein are generally directed towards systems, methods, and computer storage media for, among other things, inferring aspects related to a specific user's sleep pattern using a sleep model for the user based, at least in part, on sensor data reflecting user activity as detected by one or more sensors ("interaction data"). As used herein, "user sleep models" are probabilistic, machine learning constructs that infer or predict sleep-related aspects associated with a specific user's sleep patterns ("sleep-related aspects") by evaluating features, attributes, or variables ("sleep-related features") according to rules, frameworks, or machine learning algorithms ("sleep-related logic") that define logical relationships amongst sleep-related features or between sleep-related features and sleep-related inferences. In some embodiments, sleep-related logic further define procedures, processes, or operations used to determine the various metrics or scores associated with sleep-related inferences, such as confidence scores, variance metrics, central tendency values, probability distribution functions, and the like.

"Sleep-related inferences", as used herein, describe inferences, estimations, or approximations that provide additional insight into the specific user's sleep patterns. As such, sleep-related inferences enable identification of one or more sleep-related aspects that more closely reflect what the specific user's sleep schedule will likely be at a future time. Sleep-related inferences are determined by evaluating (or analyzing) one or more sleep-related features derived from data associated with currently-sensed interaction data with user sleep models trained using data associated with previously-sensed interaction data. In some embodiments, sleep-related inferences are used to generate or update sleep-related profiles associated with a specific user in order to provide time-sensitive recommendations personalized to the specific user's sleep pattern.

The term "service" is used broadly herein to refer to nearly any application or automation technology which may be implemented as one or more computer applications, services, or routines, such as an app running on a mobile device or the cloud, as further described herein. Similarly, the term "recommendation" is used broadly herein to refer to any recommendations, features, actions, operations, notifications, functions, and/or other utilities provided by services. The term "logic" encompasses any physical and tangible functionality for performing a task. For instance, each operation illustrated in the flowcharts corresponds to a logic component for performing that operation. An operation can be performed using, for instance, software running on computer equipment, hardware (e.g., chip-implemented logic functionality), etc., and/or any combination thereof. When implemented by computing equipment a logic component represents an electrical component that is a physical part of the computing system, however implemented.

Accordingly, one embodiment according to the present claimed invention is directed to a system comprising one or more sensors configured to provide sensor data reflecting user activity detected by the one or more sensors, a sleep model engine configured to train a user sleep model associated with a user based at least in part on previously-sensed interaction data comprised of sensor data provided at a first time, one or more processors, and one or more computer storage media storing computer-useable instructions that, when used by the one or more processors, cause the one or more processors to perform operations comprising for inferring sleep-related aspects for the user. The operations include populating, using the sleep model engine, an interaction dataset based at least in part on the previously-sensed interaction data. The operations further include training the user sleep model by analyzing the interaction dataset to identify one or more sleep-related features and sleep-related logic that maps sensor data to the one or more sleep-related features and defines logical relationships between the one or more sleep-related features and sleep-related inferences. The operations also include evaluating currently-sensed interaction data comprised of sensor data provided at a second time subsequent to the first time, with the user sleep model to determine a sleep-related inference.

In another embodiment not according to the claimed invention, a computer method is provided that includes receiving, at a server, a request from a service for a sleep-related aspect of a sleeping pattern of a user, the service for providing time-sensitive recommendations to the user. The computerized method further includes in response to receiving the request, identifying the sleep-related aspect using a sleep-related profile associated with the user, the sleep-related profile being generated with sleep-related inferences determined, at least in part, using sensor data reflecting user activity detected by one or more sensors and descriptive information associated with the sensor data. The computerized method also includes providing the identified sleep-related aspect and a confidence score associated with the identified sleep-related aspect to the service, the confidence score quantifying a likelihood of the identified sleep-related aspect coinciding with the user's actual sleeping pattern.

In another embodiment not according to the claimed invention, computer storage devices store computer-useable instructions that, when used by one or more computing devices, cause the one or more computing devices to perform a method for providing time-sensitive recommendations that are personalized to a sleeping pattern of a user, the method includes transmitting a request, by a service associated with the one or more computing devices, for a sleep-related aspect unaddressed event based at least in part on user data from a user device, the unaddressed event being associated with a user. The method also includes in response to the request, receiving the sleep-related aspect for the user, the received sleep-related aspect generated with sleep-related inferences determined, at least in part, using sensor data reflecting user activity detected by one or more sensors and interpretive data extracted from the sensor data that describes circumstances surrounding users when the sensor data was acquired. The method further includes providing time-sensitive recommendations to the user that are personalized according to the sleeping pattern of the user.

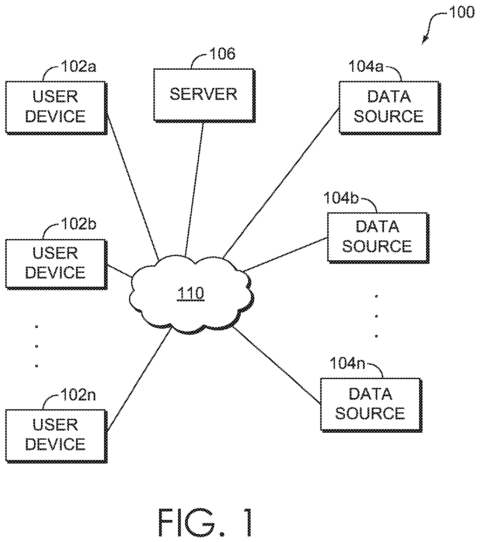

Turning now to FIG. 1, a block diagram is provided showing an example operating environment 100 in which some embodiments of the present disclosure may be employed. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether for the sake of clarity. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, some functions may be carried out by a processor executing instructions stored in memory.

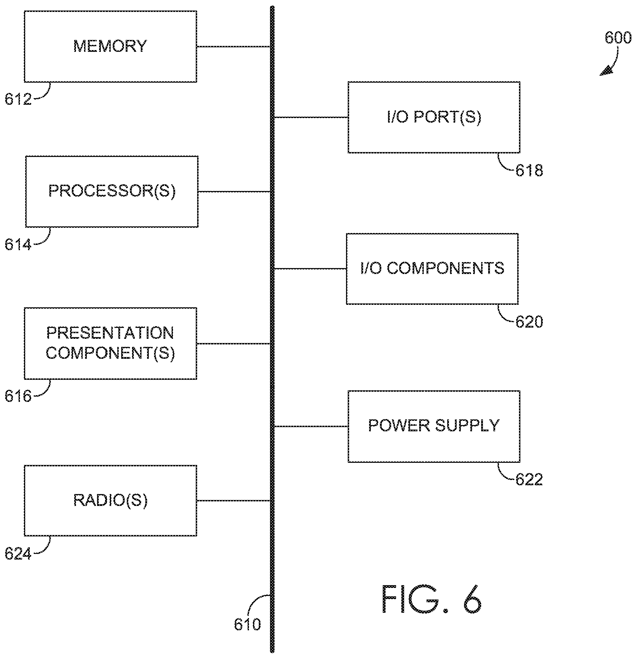

Among other components not shown, example operating environment 100 includes a number of user devices, such as user devices 102a and 102b through 102n; a number of data sources, such as data sources 104a and 104b through 104n; server 106; and network 110. It should be understood that environment 100 shown in FIG. 1 is an example of one suitable operating environment. Each of the components shown in FIG. 1 may be implemented via any type of computing device, such as computing device 600, described in connection to FIG. 6, for example. These components may communicate with each other via network 110, which may include, without limitation, one or more local area networks (LANs) and/or wide area networks (WANs). In exemplary implementations, network 110 comprises the Internet and/or a cellular network, amongst any of a variety of possible public and/or private networks.

It should be understood that any number of user devices, servers, and data sources may be employed within operating environment 100 within the scope of the present disclosure. Each may comprise a single device or multiple devices cooperating in a distributed environment. For instance, server 106 may be provided via multiple devices arranged in a distributed environment that collectively provide the functionality described herein. Additionally, other components not shown may also be included within the distributed environment.

User devices 102a and 102b through 102n can be client devices on the client-side of operating environment 100, while server 106 can be on the server-side of operating environment 100. Server 106 can comprise server-side software designed to work in conjunction with client-side software on user devices 102a and 102b through 102n so as to implement any combination of the features and functionalities discussed in the present disclosure. This division of operating environment 100 is provided to illustrate one example of a suitable environment, and there is no requirement for each implementation that any combination of server 106 and user devices 102a and 102b through 102n remain as separate entities.

User devices 102a and 102b through 102n may comprise any type of computing device capable of use by a user. For example, in one embodiment, user devices 102a through 102n may be the type of computing device described in relation to FIG. 6 herein. By way of example and not limitation, a user device may be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device.

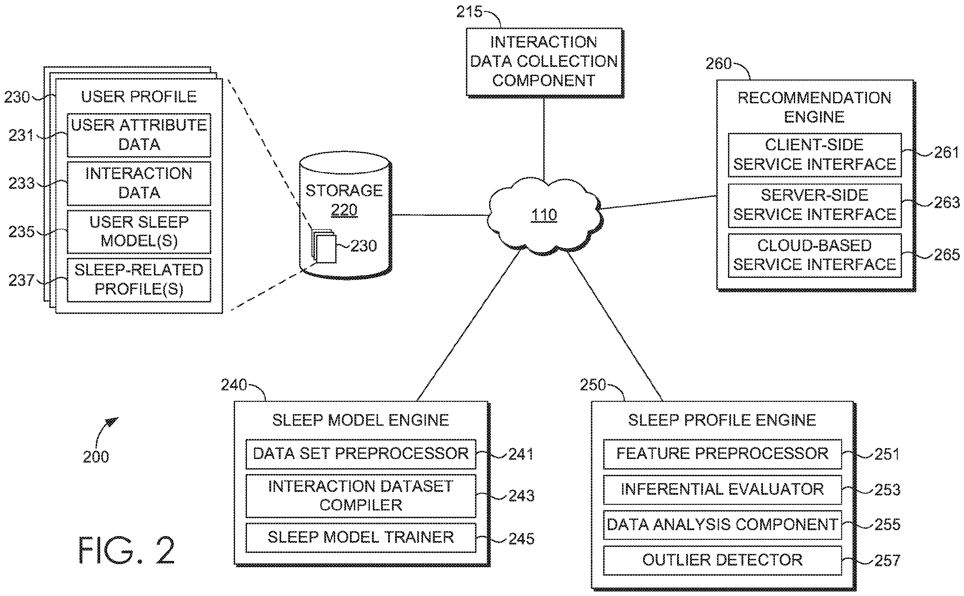

Data sources 104a and 104b through 104n may comprise data sources and/or data systems, which are configured to make data available to any of the various constituents of operating environment 100, or system 200 described in connection to FIG. 2. (For example, in one embodiment, one or more data sources 104a through 104n provide (or make available for accessing) user data to user-data collection component 214 of FIG. 2.) Data sources 104a and 104b through 104n may be discrete from user devices 102a and 102b through 102n and server 106 or may be incorporated and/or integrated into at least one of those components. In one embodiment, one or more of data sources 104a though 104n comprises one or more sensors, which may be integrated into or associated with one or more of the user device(s) 102a, 102b, or 102n or server 106. Examples of sensed user data made available by data sources 104a though 104n are described further in connection to user-data collection component 215 of FIG. 2

Operating environment 100 can be utilized in conjunction with the components of the exemplary computing system architecture depicted in FIG.2 that is suitable for implementing embodiments of the invention and is generally designated as system 200. System 200 represents only one exemplary computing system architecture suitable for implementing aspects of the invention. Other arrangements and elements can be used in addition to or instead of those shown, and some elements may be omitted altogether for the sake of clarity. Further, as with operating environment 100, many of the elements described herein are functional entities that may be implemented as discrete or distributed components or in conjunction with other components, and in any suitable combination and location. Among other components not shown, system 200 is generally comprised of components for inferring sleep-related aspects for a specific user based on interaction data. System 200 includes such components as interaction data collection component 215, storage 220, sleep model engine 240, sleep profile engine 250, and recommendation component interface 260, all of which are communicatively coupled via network 110.

In some embodiments, the functions performed by components of system 200 are associated with one or more personal assistant applications, services, or routines. In particular, such applications, services, or routines may operate on one or more user devices (such as user device 104a), servers (such as server 106), may be distributed across one or more user devices and servers, or be implemented in the cloud. Moreover, in some embodiments these components of system 200 may be distributed across a network, including one or more servers (such as server 106) and client devices (such as user device 102a), in the cloud, or may reside on a user device such as user device 102a. As with operating environment 100, some of the components described herein may be embodied as a set of compiled computer instructions, computer functions, program modules, computer software services, or an arrangement of processes carried out on one or more computer systems, such as computing device 600 described in connection to FIG. 6.

For example, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the embodiments of the invention described herein can be performed, at least in part, by one or more hardware logic components. Exemplary types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 200, it is contemplated that in some embodiments functionality of these components can be shared or distributed across other components.

Interaction data collection component 215 is generally responsible for acquiring, accessing, or receiving (and in some cases also identifying) interaction data from one or more data sources, such as data sources 104a and 104b through 104n of FIG. 1. For example, interaction data may be received from a plurality of user devices (such as user devices 102a and 102b through 102n of FIG. 1) associated with a user or in some instances, associated with multiple users. In this way, user activity of a particular user from multiple user devices used by the user (e.g. the user's mobile phone, laptop, tablet, etc.), may be received as interaction data. Interaction data may be received, acquired, or accessed, and optionally accumulated, reformatted and/or combined, by interaction data collection component 215 and stored in one or more data stores such as storage 220. For example, interaction data may be stored in or associated with a user profile 230, as described herein. The one or more data stores may thus be available to sleep model engine 240, sleep profile engine 250, and recommendation engine 260. In embodiments according to the claimed invention, interaction data collection component 215 is configured to accumulate interaction data reflecting user activity detected by one or more sensors for an individual user ("individual-sourced interaction data"). In some embodiments, interaction data collection component 215 is configured to accumulate interaction data associated with user-source interactions for a plurality of users ("crowd-sourced interaction data"). In some embodiments, any personally identifying data (i.e. interaction data that specifically identifies particular users) is either not uploaded from the one or more data sources with interaction data, is not permanently stored, and/or is not made available to sleep model engine 240, sleep profile engine 250, and/or recommendation engine 260.

Interaction data may be received from a variety of sources where the data may be available in a variety of formats. For example, in some embodiments, user data accumulated by interaction data collection component 215 is received via one or more sensors associated with user devices (such as user device 102a), servers (such as server 106), and/or other computing devices. As used herein, a sensor may include a function, routine, component, or combination thereof for sensing, detecting, or otherwise obtaining information such as user data from data sources (e.g. data source 104a of FIG. 1), and may be embodied as hardware, software, or both.

By way of example and not limitation, user data may include data that is sensed or determined from one or more sensors (referred to herein as "sensor data"), such as location information of mobile device(s), smartphone data (such as phone state, charging data, date/time, or other information derived from a smartphone), user-activity information (for example: app usage; online activity; searches; voice data such as automatic speech recognition; activity logs; communications data including calls, texts, instant messages, and emails; website posts; other user-data associated with communication events; etc.) including user activity that occurs over more than one user device, user history, session logs, application data, contacts data, calendar and schedule data, notification data, social-network data, news (including popular or trending items on search engines or social networks), online gaming data, ecommerce activity (including data from online accounts such as Amazon.com^{®}, eBay^{®}, PayPal^{®}, or Xbox Live^{®}), user-account(s) data (which may include data from user preferences or settings associated with a personal assistant application or service), home-sensor data, appliance data, global positioning system (GPS) data, vehicle signal data, traffic data, weather data (including forecasts), wearable device data, other user device data (which may include device settings, profiles, network connections such as Wi-Fi network data, or configuration data, data regarding the model number, firmware, or equipment, device pairings, such as where a user has a mobile phone paired with a Bluetooth headset, for example), gyroscope data, accelerometer data, payment or credit card usage data (which may include information from a user's PayPal account), purchase history data (such as information from a user's Amazon, corn or eBay account), other sensor data that may be sensed or otherwise detected by a sensor (or other detector) component including data derived from a sensor component associated with the user (including location, motion, orientation, position, user-access, user-activity, network-access, user-device-charging, or other data that is capable of being provided by one or more sensor component), data derived based on other data (for example, location data that can be derived from Wi-Fi, Cellular network, or IP address data), and nearly any other source of data that may be sensed or determined as described herein. In some respects, user data may be provided in user signals. A user signal can be a feed of user data from a corresponding data source. For example, a user signal could be from a smartphone, a home-sensor device, a GPS device (e.g., for location coordinates), a vehicle-sensor device, a wearable device, a user device, a gyroscope sensor, an accelerometer sensor, a calendar service, an email account, a credit card account, or other data sources. In some embodiments, interaction data collection component 215 receives or accesses data continuously, periodically, or as needed.

In general, storage 220 is configured to store computer instructions (e.g., software program instructions, routines, or services), and/or models used in embodiments of the invention described herein. In some embodiments, storage 220 also stores information or data received via the various components of system 200 and provide the various components of system 200 with access to that information or data. For example, storage 220 may store such information or data as interaction data, descriptive information associated with any of the user data described with respect to interaction data collection component 215, interaction data, inferential data, interaction datasets, crowd-sourced datasets, individual-sourced datasets, user sleep models, sleep-related inferences, sleep-related profiles, and one or more user profiles (e.g. user profiles 230). In an embodiment, storage 220 comprises a data store (or computer data memory). Further, although depicted as a single data store component, storage 220 may be embodied as one or more data stores or may be in the cloud.

Exemplary user profile 230 includes information associated with a specific user, or in some embodiments, a group or category of users. As shown in FIG. 2, user profiles 230 include such information as: interaction datasets 231, user attributes 233, user sleep models 235, and sleep-related profiles 237. The information stored in user profiles 230 may be available to the routines or other components of example system 200.

User attribute data 231 comprises any characteristic, trait, or attribute associated with a specific user. In some embodiments, user attribute data 231 includes information relating to demographic data, location data, occupational data, educational data, and the like. For example, demographic data includes such information as age, gender, nationality, religious affiliations, ethnicities, and the like. As another example, location data includes such information for the specific user as: current physical location, work location, home location, projected future location(s), and the like. In some embodiments, similar location data may be available for one or more user devices or one or more individuals associated with the specific user (e.g. friends, family, etc.). User attribute data 231 may be acquired from users in a variety of ways. In some embodiments, user attribute data 231 is submitted by users to system 200 via any of the input devices described below with respect to computing device 600 of FIG. 6. In some embodiments, user attribute data 231 is compiled from user data submitted by users as part of registering for user profiles with applications; social media profile building; census registration; and the like. In some embodiments, user attribute data 231 is acquired from one or more reports associated with users, such as credit reports; background reports; employment reports; and the like.

In embodiments according to the claimed invention, interaction dataset 233 broadly pertains to any dataset populated using any data associated with previously-sensed interaction data that is used to train and optionally to test and/or validate user sleep models 235. User sleep model 235 may be a machine-learned, probabilistic inference model configured to determine sleep-related inferences by evaluating data associated with currently-sensed interaction data, in some embodiments. Sleep-related profile 237 include information regarding one or more sleep-related aspects for a specific user. Sleep-related profile 237 may be initialized and/or updated using sleep-related inferences determined by evaluating currently-sensed interaction data using user sleep model 235. Sleep-related aspects include one or more of the following aspects of a specific user's sleep pattern: bedtime, wakening time, and may include one or more of the following aspects of a specific user's sleep pattern: bedtime range, wakening time range, sleep duration, and the like. Sleep-related aspects of sleep-related profile 237 may be represented according to any known probabilistic machine learning model output. For example, sleep-related aspects may be represented as a statistical distribution describing a particular in terms of a central tendency metric (e.g. a mean, a median, or a mode) and a variance metric (e.g. a range, a standard deviation, or a variance). Further details regarding interaction datasets 233, user sleep models 235, and sleep-related profiles 237 are described below with respect to sleep model engine 240.

In embodiments according to the claimed invention, sleep model engine 240 is generally adapted to populate interaction datasets 233 in cooperation with storage 220 and train user sleep models 235 using those interaction datasets 233. User sleep models 235 trained by sleep model engine 240 enable sleep profile engine 250 to predict sleep-related aspects 237 for a specific user. As shown in exemplary system 200, sleep model engine 240 includes dataset preprocessor 241, interaction dataset compiler 243, and sleep model trainer 245.

Dataset preprocessor 241 may be configured to create user-attribute filters using user attribute data 231, in embodiments where crowd-sourced datasets are used to populate interaction datasets 233. In these embodiments, user sleep models 235 may, in a sense, be pre-tailored for a specific user through selecting previously-sensed interaction data that is more relevant to the specific user for use in training user sleep models. Dataset preprocessor 241 enables such pre-tailoring of user sleep models 235 by applying at least one user attribute filter to crowd-sourced datasets prior to populating interaction datasets 233 with their associated previously-sensed interaction data. In some embodiments, user attribute filters are based on data acquired from user attributes 231 associated with user profiles 230. In some embodiments, user attribute filters may be based on data acquired from users via any of the input devices described below with respect to computing device 600 of FIG. 6.

For example, a user-location filter may be applied to crowd-sourced datasets to exclude previously-sensed interaction data associated with users outside of a pre-determined distance range from a specific user. As another example, a user-demographic filter may be applied to crowd-sourced datasets to only include previously-sensed interaction data associated with users having at least one demographic characteristic in common with a specific user (e.g. age, income, cultural identity, gender, etc.). In another example, a user-occupation filter is applied to crowd-sourced data sets to only include previously-sensed interaction data associated with users having at least one occupational characteristic in common with a specific user (e.g. job title, industry, level of experience, etc.).

Interaction dataset compiler 243 is configured to populate, compile, or build interaction datasets 233 with previously-sensed interaction data received from interaction data collection component 215, storage 220, and/or sleep inference engine 250. In some embodiments, interaction dataset 233 is populated with individual-sourced data reflecting a specific user's activity as detected by one or more sensors. In some embodiments, interaction dataset 233 is populated with crowd-sourced interaction data reflecting the activity of multiple users as detected by one or more sensors. In some embodiments, interaction dataset 233 is populated with descriptive data associated with previously-sensed interaction data, such as time/date stamps, metadata tags, geographical location data, etc. In some embodiments, interaction dataset is populated with interpretive data as discussed in more detail below with respect to inferential evaluator 253.

Embodiments of sleep model trainer 245 may be configured to train user sleep models (e.g. user sleep model 235) through analyzing interaction dataset 233 to identify sleep-related features, sleep-related logic, and in some embodiments sleep-related weights. As discussed above, in some embodiments, user sleep model 235 comprises a machine-learned, probabilistic inference model configured to determine sleep-related inferences by evaluating data associated with currently-sensed interaction data. As such, user sleep model 235 may be trained by any machine learning technique known by those skilled in the art.

Sleep-related features may be identified by sleep model trainer 245 based on any combination of user data described in connection to interaction data collection component 215, descriptive information associated with such user data, and interpretive data provided by inferential evaluator 253. In some embodiments, sleep-related features are identified by sleep model trainer 245 recognizing patterns between data within interaction dataset 233 and a specific user's sleeping pattern. For example, sleep model trainer 245 may use a pre-determined statistical threshold, such as a correlation threshold (either positive or negative), to recognize such patterns. Pre-determined statistical thresholds may reflect relationships among identified sleep-related features or between sleep-related features and various aspects of the specific user's sleeping pattern.

In some embodiments, sleep-related features utilize user signals providing a feed of interaction data from data sources (e.g. a user device) associated with a user. In these embodiments, feeds of interaction data may be provided at any level of granularity including: continuously, periodically (e.g. every minute, 5 minutes, hour, 2 hours, etc.), or upon the user signal transitioning logic states (e.g. off to on, high to low, etc.). User signals providing a feed of interaction data may be received from sensors associated with applications or devices on a client-side, on a server-side, in the cloud, or any combination thereof.

Sleep model trainer 245 is further configured to determine sleep-related logic for user sleep models that maps data associated with interaction data to sleep-related features and defines logical relationships amongst sleep-related features and/or between sleep-related features and sleep-related inferences. In some embodiments, sleep-related logic further define procedures, processes, or operations used to determine the various metrics or scores associated with sleep-related inferences, such as confidence scores, variance metrics, central tendency values, probability distribution functions, and the like.

In some embodiments, confidence scores are employed to quantify a degree of confidence in how accurately one or more sleep-related aspects associated with a sleep-related profile will reflect the user's sleep pattern. In these embodiments, confidence scores may be associated with the sleep-related profile overall, particular sleep-related aspects of the sleep-related profile, and/or one or more metrics (e.g. variance metric, central tendency metric, etc.) associated with particular sleep-related aspects of the sleep-related profile. Stated differently, a confidence score is an associated probability or confidence that indicates a likelihood of a predicted sleep-related aspect coinciding with a user's actual sleep pattern. In some embodiments, services use the confidence score as a threshold in providing time-sensitive recommendations to a user.

Sleep model trainer 245 may be further configured to assign at least one sleep-related weight for the sleep-related features in embodiments where sleep-related weights are used. Sleep-related weights may be determined by analyzing interaction datasets 233 used to train user sleep models 235. Sleep-related weights reflect a corresponding sleep-related feature's relative statistical significance in determining (predicting the likelihood of) a sleep-related inference. Such sleep-related weights may be assigned by sleep model trainer 245 to one or more sleep-related features associated with user sleep models.

In an embodiment, sleep model trainer 245 may determine sleep-related weights through a regression analysis method (e.g. least-squares regression) in order to reduce an error level between a sleep-related inference and a corresponding sleep-related aspect actually experienced by the specific user. For example, sleep model trainer 245 may provide sleep-related weights that result in a sleep-related inference that is used to determine that a specific user will awaken between 7 A.M. and 8 A.M. However, in this example, the specific user actually awakens at 9 A.M. Sleep model trainer 245, in this example, may determine sleep-related weights that result in a sleep-related inference that more closely reflects the specific user's actual wakening time of 9 A.M. As a result, the error level between sleep-related inferences and corresponding sleep-related aspects actually experienced by the specific user may be reduced.

Although FIG. 2 depicts sleep model engine 240 as a separate component, those skilled in the art will recognize that sleep model engine 240, or any sub-component thereof, may be integrated with another component, such as an interaction data collection component, an analysis tool, a user device, a web server, or the like. In one embodiment, sleep model engine 240 is implemented as part of sleep profile engine 250 or other components similarly designed to generate sleep-related profiles. In some embodiments, sleep model engine 240 is implemented as part of a web server, a hybrid hardware/software component, or as a software module running on a conventional personal computer that is being used to infer sleep-related aspects of user sleep patterns using interaction data.

Sleep inference engine 250, in general, is configured to infer sleep-related aspects by analyzing currently-sensed interaction data with user sleep models trained using previously-sensed interaction data. As shown in exemplary system 200, sleep profile engine 250 includes feature preprocessor 251, inferential evaluator 253, data analysis component 255, and outlier detector 257.

Feature preprocessor 251 is configured to map data associated with interaction data to generate sleep-related features for analysis by data analysis component 255, as identified by sleep model trainer 245. Sleep-related features generated by feature preprocessor 251 may include any of the data associated with interaction data discussed herein. In some embodiments, feature preprocessor 251 is further configured to convert data associated with interaction data into appropriate formats for mapping to sleep-related features, as specified by sleep model trainer 245. For example, data associated with interaction data may be received as analog data or digital data provided as any number of data types including: matrices; vectors; and scalars. In this example, feature preprocessor 251 converts such data into an appropriate format for corresponding sleep-related features to be usable by data analysis component 255.

In some embodiments, feature preprocessor 251 may map data associated with currently-sensed interaction data from a single data source to a single sleep-related feature. For example, feature preprocessor 251 may map currently-sensed interaction data from an alarm clock application running on a specific user's smart phone to a single sleep-related feature. In this example, sleep model trainer 245 determined the specific user regularly deactivates the alarm clock application on the smart phone shortly after awakening.

In some embodiments, feature preprocessor 251 may map data associated with currently-sensed interaction data from a plurality of data sources to a single sleep-related feature. For example, feature preprocessor 251 may map currently-sensed interaction data from a news website hosted by a remote server with which a specific user is interacting and a user device the specific user is using to interact with the news website to a single-related feature. In this example, the descriptive data may be in the form of a device identifier associated with interaction data received from a user device. Sleep model trainer 245 determined, in this example, that the specific user reads news articles on the news website on a tablet computing device prior to bedtime. Whereas, interaction data collected from the same news website would not be useful to infer the specific user's bedtime if the user specific user interacts with the news website on a smart phone while getting ready for work in the morning.

Inferential evaluator 253 may be configured to extract interpretive data from sensed interaction data and provide the extracted interpretive data to storage 220 for use by other components of system 200. Interpretive data, in general, corresponds to any information providing context to any interaction data utilized by system 200 by describing circumstances surrounding users, devices, and/or applications when interaction data is acquired. Stated differently, interpretive data provides background information for sensed interaction data that enables system 200 to identify more patterns within interaction datasets 233 than would otherwise possible if system 200 was unaware of the surrounding circumstances.

Examples of interpretive data include: tasks being performed at the time, such as military reserve training, trying to lose weight resulting in users waking up earlier to jog; information regarding temporal significance such as birthdays, holidays, anniversaries, seasons of the year, special events, vacations, associations between recent events; information regarding geographical significance, such as work place/home locations, changes in location (e.g. moving from one city to another city or one time zone to another time zone), vacation destinations; or any other information that provides system with a higher level of understanding about circumstances surrounding sensed interaction data.

Data analysis component 255 is generally configured to implement sleep-related logic provided by sleep model engine 240 in user sleep models on sleep-related features comprised of data associated with interaction data from feature preprocessor 251. By implementing sleep-related logic on sleep-related features, data analysis component 255 is able to determine sleep-related inferences and the various metrics, scores, or statistical information associated with sleep-related inferences, such as confidence scores, variance metrics, central tendency values, probability distribution functions, and the like. In cooperation with storage 220, data analysis component 255 may be further configured to update (or initialize) sleep-related profiles associated with the specific user using sleep-related inferences and the various metrics, scores, or statistical information associated with sleep-related inferences determined from currently-sensed interaction data.

In embodiments according to the claimed invention, outlier detector 257 is provided and configured to identify sleep-related inferences deviating from previously determined sleep-related inferences enough to constitute a statistical outlier ("outlier inferences") using a pre-determined cutoff. For example, the pre-determined cutoff may be established according to known statistical anomaly detection methods, such as: Fuzzy Logic based outlier detection; Cluster Analysis based outlier detection; Density-based techniques, or any other known statistical anomaly detection metric. In some embodiments, outlier detector 257 compares sleep-related inferences with previously determined sleep-related inferences associated with particular sleep-related profiles using a pre-determined cutoff.

In embodiments according to the claimed invention, data associated with sleep-related inferences identified as statistical outliers by outlier detector 257 are stored in interaction datasets referred to herein as "outlier datasets". Such data, for example, may include the determined sleep-related inference, any sleep-related features used to determine that sleep-related inference, or any currently-sensed interaction data acquired within a specified time of determining that sleep-related inference. In embodiments not according to the claimed invention, outlier datasets are used to train user sleep models according to any of the embodiments disclosed herein. In these embodiments not according to the claimed invention, outlier datasets may be used instead of, to replace a portion of and/or be merged with interaction datasets in training user sleep models that are referred to herein as "alternative user sleep models". In embodiments according to the claimed invention, sleep-related inferences determined using alternative user sleep models are used to generate sleep related profiles (referred to herein as "alternative sleep-related profiles"). In these embodiments according to the claimed invention, alternative sleep-related profiles may be identified using alternative profile labels based on some commonality within datasets used to train their respective alternative user sleep model, as determined by sleep model engine 240.

In embodiments according to the claimed invention, if sleep model engine 240 determines that an outlier dataset used to train an alternative user sleep model is comprised of interaction data associated with a particular geographic location (e.g. Israel, Europe, a vacation home in Mexico, etc.). In these embodiments, an alternative sleep-related profile generated using sleep-related inferences determined using this alternative user sleep model may be identified using an alternative profile label designating the particular geographic location. Accordingly, the alternative sleep-related profile of these embodiments comprises sleep-related aspects for the specific user that are specific to that particular geographic location. For example, the specific user may wake up later when vacationing in Mexico compared to when they are home working.

As another example not according to the claimed invention, a sleep model engine 240 determines that an outlier dataset used to train an alternative user sleep model is comprised of interaction data associated with a particular period of time (e.g. weekdays/weekends, summer/winter, specific weekends every month, etc.). In this example, an alternative sleep-related profile generated using sleep-related inferences determined using this alternative user sleep model may be identified using an alternative profile label designating the particular period of time. Accordingly, the alternative sleep-related profile of this example may comprise sleep-related aspects for the specific user that are specific to that particular period of time. For example, the specific user may be in a military reserve unit, which results in the specific user waking up earlier on specific weekends of the month they are training with the military reserve unit versus when they are at home relaxing on the weekend.

Recommendation Engine 260 is configured to receive requests for sleep-related aspects for a specific user, identify the requested sleep-related aspects using sleep-related profiles associated with the specific user, and provide the identified sleep-related aspects to an application, service, or device submitting the request. In some embodiments, recommendation engine 260 may be implemented as an application programming interface ("API"). As shown in FIG. 2, recommendation engine 260 is comprised of client-side service interface 261, server-side service interface 263, and cloud-based service interface 265.

Client-side service interface 261 is configured to receive requests from client-side recommendation applications or services that directly provide time-sensitive recommendations to a specific user. In an example according to the claimed invention, received requests may originate from an application running on the specific user's smart phone, such as a personal assistant application, an alarm clock application, or a communication application. In another example also according to the claimed invention, a request may originate from a controller communicatively coupled to an actuator associated with any client-side device having automation capabilities used by the specific user, such as a coffee pot, an automobile, or a heating, ventilating, and air conditioning (HVAC) unit.

In an embodiment not according to the claimed invention, server-side service interface 263 is configured to receive requests from server-side applications or services hosted on 3^{rd} party devices that indirectly provide time-sensitive recommendations to the specific user. For example, the received request could originate from a server hosting a website offering commercial or informational services related to social media, traffic, weather, news, and the like. In another example, the request could originate from a medical provider's device seeking to obtain information about the specific user's sleep pattern for medical diagnostic or treatment purposes. In some embodiments, requests could be received from a recommendation engine associated with a sleep inference engine associated with another user (e.g. the specific user's family members, friends, etc.). Similarly, cloud-based service interface 265 is configured to receive requests from any cloud-based applications or services.

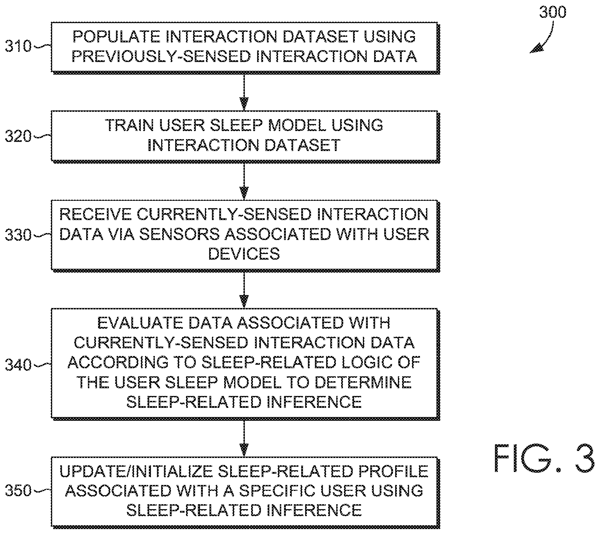

Turning now to FIG. 3, a flow diagram is provided illustrating a method 300 for determining a sleep-related prediction for a specific user using currently-sensed interaction data and a user sleep model trained using previously-sensed interaction data, in accordance with embodiments of the present claimed invention. In step 310, an interaction dataset is populated using previously-sensed interaction data. In an embodiment, previously-sensed interaction data is received from an interaction data collection component (e.g. interaction data collection component 215 of FIG. 2) prior to being accumulated in stored datasets. In another embodiment, previously-sensed interaction data is retrieved from stored datasets that include any of the interaction data described with respect to interaction data collection component 215. For example, stored datasets may include accumulated previously-sensed interaction data associated with a specific user from an individual dataset. In another example, stored datasets may include accumulated previously-sensed interaction data associated with a plurality of users from a crowd-sourced dataset. In another example, stored datasets may include accumulated previously-sensed interaction data from an individual dataset, a crowd-sourced dataset, or a combination thereof.

In embodiments using crowd-sourced datasets, pre-processing may be performed on previously-sensed interaction data retrieved from crowd-sourced datasets prior to populating interaction datasets. Such pre-processing may include noise filtering, removal of outlier data, and/or treatment of missing data. In embodiments with crowd-soured datasets, pre-processing may include filtering previously-sensed interaction data from crowd-soured datasets using one or more filters based on user attributes (e.g. user attributes 231 of FIG. 2). When used, the one or more filters segregate previously-sensed interaction data received from users with the user attributes from previously-sensed interaction data received from users without the user attributes. Consequently, filtered previously-sensed interaction data may be either included or excluded from the interaction dataset to provide previously-sensed interaction data that is generally tailored for training, testing, and/or validating user sleep models.

In step 320, a user sleep model is trained, and optionally tested or validated, using populated interaction datasets. As discussed above, user sleep models are trained using any known machine learning technique by identifying one or more sleep-related features in the interaction dataset. In some embodiments, sleep-related profiles for the specific user are generated by populating the sleep-related profiles with initial values determined using previously-sensed interaction data in populated interaction datasets. In these embodiments, confidence scores associated with such sleep-related profiles are assigned a minimal value (e.g. zero, 1%, 0.02, etc.). For example, a sleep-related profile for the specific user may be generated by populating the sleep-related profile with initial values for sleep-related aspects, such as: wakening time(s); bedtime(s); wakening time range(s), bedtime range(s), sleep duration(s), and the like. In this example, these initial values for sleep-related aspects may include an initial awakening time of 7 A.M., an initial bedtime of 11 P.M., an initial wakening time range of 6 A.M. to 8 A.M., an initial bedtime range of 9:30 P.M. to 1 A.M., and an initial sleep duration of 8 hours. In this example when confidence scores are used, the initial wakening time, bedtime, wakening time range, bedtime range, and sleep duration may be assigned confidence scores of 5%, 3%, 1%, 3%, and 2%, respectively. Alternatively, the initial values for sleep-related aspects in this example may be assigned confidence scores using any numbering system or combinations thereof. User sleep models include sleep-related logic that defines a logical framework for determining sleep-related inferences through evaluation of data associated with currently-sensed interaction data. In some embodiments, sleep-related logic includes one or more of the following probabilistic rule types: prediction rules, ranking rules, clustering rules, or classifying rules. Sleep-related logic defines the logical framework by: mapping data associated with currently-sensed interaction data to each of the one or more sleep-related features; prescribing relationships between the one or more sleep-related features to determine sleep-related inferences using data associated with currently-sensed interaction data; and, in some embodiments, assigning sleep-related weights to at least one sleep-related feature. Sleep-related weights are assigned to particular sleep-related features based on a particular sleep-feature's relative significance in determining (e.g. predicting the likelihood of) a sleep-related inference. As such, user sleep models and their determined sleep-related inferences may be used to generate or update sleep-related profiles for a specific user.

In step 330, currently-sensed interaction data is received via one or more sensors associated with user devices. In step 340, a sleep-related inference is determined through evaluation of data associated with that currently-sensed interaction data according to sleep-related logic associated with the user sleep model. In embodiments, data associated with that currently-sensed interaction data includes one or more of the following: raw interaction data received from sensors, descriptive information associated with the raw interaction data, inference data determined from raw interaction data and/or descriptive information, or any combination thereof. As discussed in connection with sleep inference engine 250 of FIG. 2, in embodiments, sleep-related inferences may be presented in various formats depending on type of sleep-related logic used to determine a particular sleep-related inference, such as classification labels, probability distribution functions, expected outcomes, outcome scores, and the like.

In step 350, a sleep-related profile for the specific user is updated using the sleep-related inference. In embodiments where sleep-related profile(s) have not been generated with initial values, sleep-related inferences may be used as initial values to initialize the sleep-related profile(s). In embodiments where sleep-related profiles are generated by populating the sleep-related profile(s) with initial values determined using previously-sensed interaction data in populated interaction datasets, sleep-related inferences may be reconciled with corresponding initial values. In these embodiments, sleep-related inferences are reconciled with corresponding initial values through replacement, averaging, weighted averaging, interpolation, extrapolation, and the like. In these embodiments where confidence scores are assigned, confidence scores may be increased from previous values according to any of the embodiments described herein.

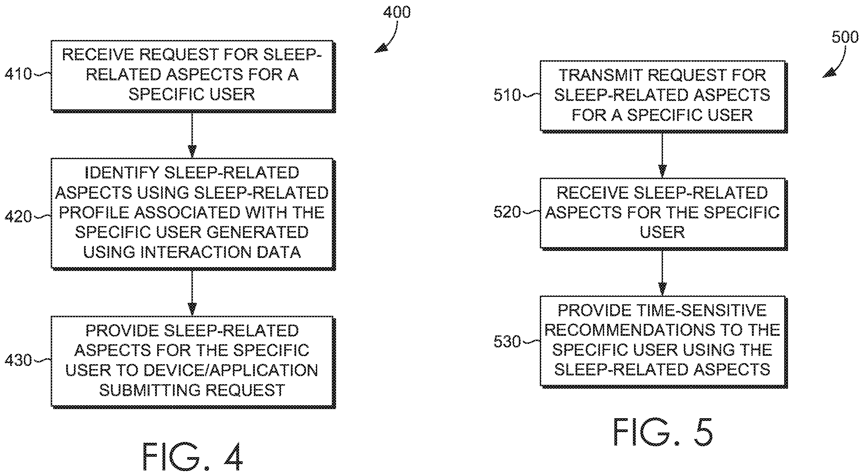

With reference now to FIG. 4, a flow diagram is provided illustrating a method 400 of providing one or more sleep-related aspects for a specific user, which is not in accordance with the claimed invention. In step 410, a request is received for the one or more sleep-related aspects for the specific user. In step 420, the one or more sleep-related aspects are identified using sleep-related profiles associated with the specific user, in response to receiving the request. The sleep-related profiles being generated using interaction data according to any of the embodiments described herein, such as described in FIG. 3. Further details of generating sleep-related profiles are provided in connection with sleep inference engine 250 of FIG. 2. In step 430, the one or more sleep-related aspects are provided to the device or application submitting the request.

In an embodiment, a request may include one or more threshold values ("threshold usability criterion") that corresponding sleep-related aspects must satisfy before being usable by the requesting device or application. For example, a device or application submitting a request may include such threshold usability criterion as: a minimal confidence score; a maximum variability metric; or a defined range for a central tendency metric that corresponding sleep-related aspects must satisfy.

In another embodiment, a request may include request tailoring data adapted to elicit sleep-related aspects for the specific user only inferred using interaction data associated with particular descriptive data. For example, a request may include tailoring data adapted to elicit sleep-related aspects for the specific user only inferred from interaction data associated with specific time periods, such as weekends, weekdays, specific days of the week, and the like. In another example, a request may include tailoring data adapted to elicit sleep-related aspects for the specific user only inferred from interaction data associated with specific locations, such as the specific user's home, particular countries, time zones, and the like.

With reference now to FIG. 5, a flow diagram is provided illustrating a method 500 for providing time-sensitive services using sleep pattern aspects for a specific user inferred from interaction data, which is not in accordance with the claimed invention. In step 510, a request for one or more sleep-related aspects for the specific user is transmitted. Both the request and the one or more sleep-related aspects being implemented as described in any of the embodiments discussed herein. In step 520, the one or more sleep-related aspects for the specific user are received in response to the transmitted request. The one or more sleep-related aspects being inferred from currently-sensed interaction data associate with the specific user as described above in the various embodiments discussed in FIG. 3. In step 530, upon receipt, the one or more sleep-related aspects are used to provide time-sensitive recommendations to the specific user. The time-sensitive recommendations being implemented as described in any of the embodiments discussed herein.

Accordingly, we have described various aspects of technology directed to systems and methods for inferring sleep-related aspects for a user based, in part, on sensor data reflecting user activity detected by one or more sensors.

Having described various embodiments of the invention, an exemplary computing environment suitable for implementing embodiments of the invention is now described. With reference to FIG. 6, an exemplary computing device is provided and referred to generally as computing device 600. Computing device 600 is but one example of a suitable computing environment and is not intended to suggest any limitation as to the scope of use or functionality of the invention. Neither should computing device 600 be interpreted as having any dependency or requirement relating to any one or combination of components illustrated.

Embodiments of the invention may be described in the general context of computer code or machine-useable instructions, including computer-useable or computer-executable instructions, such as program modules, being executed by a computer or other machine, such as a personal data assistant, a smartphone, a tablet PC, or other handheld device. Generally, program modules, including routines, programs, objects, components, data structures, and the like, refer to code that performs particular tasks or implements particular abstract data types. Embodiments of the invention may be practiced in a variety of system configurations, including handheld devices, consumer electronics, general-purpose computers, more specialty computing devices, etc. Embodiments of the invention may also be practiced in distributed computing environments where tasks are performed by remote-processing devices that are linked through a communications network. In a distributed computing environment, program modules may be located in both local and remote computer storage media including memory storage devices.

With reference to FIG. 6, computing device 600 includes bus 610 that directly or indirectly couples the following devices: memory 612, one or more processors 614, one or more presentation components 616, one or more input/output (I/O) ports 618, one or more I/O components 620, and illustrative power supply 622. Bus 610 represents what may be one or more busses (such as an address bus, data bus, or combination thereof). Although the various blocks of FIG. 6 are shown with lines for the sake of clarity, in reality, these blocks represent logical, not necessarily actual, components. For example, one may consider a presentation component such as a display device to be an I/O component. Also, processors have memory. The inventors hereof recognize that such is the nature of the art and reiterate that the diagram of FIG. 6 is merely illustrative of an exemplary computing device that can be used in connection with one or more embodiments of the present invention. Distinction is not made between such categories as "workstation," "server," "laptop," "handheld device," etc., as all are contemplated within the scope of FIG. 6 and with reference to "computing device."

Computing device 600 typically includes a variety of computer-readable media. Computer-readable media can be any available media that can be accessed by computing device 600 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules, or other data. Computer storage media includes, but is not limited to, RAM, ROM, EEPROM, flash memory or other memory technology, CD-ROM, digital versatile disks (DVDs) or other optical disk storage, magnetic cassettes, magnetic tape, magnetic disk storage or other magnetic storage devices, or any other medium which can be used to store the desired information and which can be accessed by computing device 600. Computer storage media does not comprise signals per se. Communication media typically embodies computer-readable instructions, data structures, program modules, or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media, such as a wired network or direct-wired connection, and wireless media, such as acoustic, RF, infrared, and other wireless media. Combinations of any of the above should also be included within the scope of computer-readable media.

Memory 612 includes computer storage media in the form of volatile and/or nonvolatile memory. The memory may be removable, non-removable, or a combination thereof. Exemplary hardware devices include solid-state memory, hard drives, optical-disc drives, etc. Computing device 600 includes one or more processors 614 that read data from various entities such as memory 612 or I/O components 620. Presentation component(s) 616 presents data indications to a user or other device. Exemplary presentation components include a display device, speaker, printing component, vibrating component, and the like.

I/O ports 618 allow computing device 600 to be logically coupled to other devices, including I/O components 620, some of which may be built in. Illustrative components include a microphone, joystick, game pad, satellite dish, scanner, printer, wireless device, etc. I/O components 620 may provide a natural user interface (NUI) that processes air gestures, voice, or other physiological inputs generated by a user. In some instances, inputs may be transmitted to an appropriate network element for further processing. An NUI may implement any combination of speech recognition, touch and stylus recognition, facial recognition, biometric recognition, gesture recognition both on screen and adjacent to the screen, air gestures, head and eye tracking, and touch recognition associated with displays on computing device 600. Computing device 600 may be equipped with depth cameras, such as stereoscopic camera systems, infrared camera systems, RGB camera systems, and combinations of these, for gesture detection and recognition. Additionally, computing device 600 may be equipped with accelerometers or gyroscopes that enable detection of motion. The output of the accelerometers or gyroscopes may be provided to the display of computing device 600 to render immersive augmented reality or virtual reality.

Some embodiments of computing device 600 may include one or more radio(s) 624 (or similar wireless communication components). Radio 624 transmits and receives radio or wireless communications. Computing device 600 may be a wireless terminal adapted to receive communications and media over various wireless networks. As such, computing device 600 may communicate via wireless protocols, such as code division multiple access ("CDMA"), global system for mobiles ("GSM"), or time division multiple access ("TDMA"), as well as others, to communicate with other devices. The radio communications may be a short-range connection, a long-range connection, or a combination of both a short-range and a long-range wireless telecommunications connection. When we refer to "short" and "long" types of connections, we do not mean to refer to the spatial relation between two devices. Instead, we are generally referring to short range and long range as different categories, or types, of connections (i.e., a primary connection and a secondary connection). A short-range connection may include, by way of example and not limitation, a Wi-Fi^{®} connection to a device (e.g., mobile hotspot) that provides access to a wireless communications network, such as a WLAN connection using the 802.11 protocol; a Bluetooth connection to another computing device is a second example of a short-range connection, or a near-field communication connection. A long-range connection may include a connection using, by way of example and not limitation, one or more of CDMA, GPRS, GSM, TDMA, and 802.16 protocols.

With reference now to environment 100, system 200, and methods 400, 500 and 600 (FIGS. 1-2 and 3-5), several additional examples are described for providing services based on user sleep pattern inferences. These examples may be carried out using various embodiments of the claimed invention described herein. In a first example, a user accidentally leaves his phone at home, where it is plugged in and charging. But the user remembers his smart watch and upon getting to work, the user responds to an email message on his computer and then makes on online purchase. Even though the user's phone might provide interaction data suggesting that the user is still at home and sleeping in, interaction data provided by the other user devices (e.g., the smart watch, which may provide location or physiological data, the user's computer and online activity indicating the user has drafted an email and has completed an online purchase) indicates that the user is awake.

In another example, the sleep model for a particular user may be used to provide a service to the user, such as turning on a coffee pot in the morning and/or adjusting the thermostat to be warmer 30 minutes before the user wakes up; or turning off lights that may be left on, after the user is likely asleep. In this example, where a particular user has a routine of waking up earlier on certain days and sleeping in on other days, the coffee pot will always be ready just as the user wakes up. Suppose further that the user wakes up earlier than the normal routine for a particular day, in some embodiments, the coffee pot turns on at the earlier time, based on sleep-related logic in the user sleep models. In a further example, suppose on some nights a user momentarily wakes up to check his email several times throughout the night, but usually goes back to sleep afterwards. On one particular, day, the user checks his email at 3:55 A.M. But last night the user responded to a text message indicating that he would pick his wife up from the airport at 5:30 A.M. So it may be inferred in this instance that the user does not intend to go back to sleep, but to stay awake. Thus the user's coffee pot may be activated.

In another example, a user's phone sound settings maybe muted or an application's sound may be muted (e.g. text messages) during those times that the sleep model determines that the user is likely asleep. Similarly, other notifications may be modified or presented differently, based on the sleep model, such as by increasing or decreasing the volume or modifying a notification to present the notification in an alternative format.

In yet another example, a meeting or call on a particular day may be scheduled based on when the sleep model(s) determine that the user is likely to wake. Similarly, reminders of important things, such as important events or notifications may be scheduled to be presented to the user after the user is likely to wake. In yet another example, some reminders may be provided to the user in advance of when the user is likely goes to bed so that the user can act on the reminder. For example, if a user's car insurance expires at midnight, but the user is expected to go to sleep at 9:30 PM, then the user may be reminded to renew her car insurance at 7:30 A.M., so that the user has time to complete the task before bed. In another example, a user whose child is going on a field trip the next day and needs to pack a school lunch, may be reminded several hours before the user is likely to go to sleep that his child needs to bring a lunch tomorrow. In this way, instead of the user has time to make the lunch before going to sleep.

## Claims

1. A method (300) performed by a system comprising one or more processors (614) and one or more sensors configured to provide sensor data reflecting user activity detected by the one or more sensors, the method comprising:
populating (310), using a sleep model engine, an interaction dataset based at least in part on previously-sensed interaction data comprised of sensor data provided at a first time;
training (320), using the sleep model engine, a user sleep model by analyzing the interaction dataset to identify one or more sleep-related features and sleep-related logic that maps sensor data to the one or more sleep-related features and defines logical relationships between the one or more sleep-related features and sleep-related inferences;
evaluating (340) currently-sensed interaction data comprised of sensor data provided at a second time subsequent to the first time, with the user sleep model to determine a sleep-related inference;
updating (350) a sleep-related profile associated with the user using the sleep-related inference, wherein the sleep-related profile is comprised of one or more sleep-related aspects of a sleeping pattern, wherein the one or more sleep-related aspects comprise a prediction for a future time of one or more of a bedtime or a wakening time, the one or more sleep-related aspects of the sleeping pattern to be used by at least one of an application on a mobile device of the user and a client-side device of the user having automation capabilities;
identifying the sleep-related inference as an outlier inference using a pre-determined cutoff;
determining interaction data associated with a particular geographic location;
storing data associated with the outlier inference and the interaction data associated with the particular geographic location in an outlier dataset;
training an alternative user sleep model using the outlier dataset to generate an alternative sleep-related profile associated with the particular geographic location for the user, the alternative sleep-related profile comprising sleep-related aspects for the user that are specific to the particular geographic location.

2. The method of claim 1, wherein the application on the mobile device of the user to use the one or more sleep-related aspects of the sleeping pattern is an application controlling sound settings during predicted sleep time of the user.

3. The method of claim 1, wherein the application on the mobile device of the user to use the one or more sleep-related aspects of the sleeping pattern is an application sending reminders to the user.

4. The method of claim 1, wherein the client-side device of the user having automation capabilities to use the one or more sleep-related aspects of the sleeping pattern is a coffee pot configured to be activated according to a predicted wakening time.

5. The method of claim 1, wherein the sensor data includes session data reflecting user online activity.

6. The method of claim 1, wherein the sensor data includes user activity occurring over more than one user device.

7. The method of claim 1, wherein the sensor data includes user data associated with communication events.

8. The method of claim 1, wherein the interaction dataset is populated with previously-sensed interaction data from multiple users associated with a crowd-sourced interaction dataset.

9. The method of claim 8, wherein previously-sensed interaction data from the crowd-sourced interaction dataset is filtered prior to populating the interaction dataset using at least one user attribute filter.

10. The method of claim 1, wherein training (320) the user sleep model is further comprised of analyzing the interaction dataset to assign at least one sleep-related weight for the one or more sleep-related features that reflects a relative statistical significance of corresponding sleep-related features in determining the sleep-related inference.

11. A computerized system (102a-n, 106, 600) comprising:
one or more sensors configured to provide sensor data reflecting user activity detected by the one or more sensors;
one or more processors (614); and
one or more computer storage media (612) storing computer-useable instructions that, when used by the one or more processors (614), cause the one or more processors (614) to perform a method according to any of the preceding claims.

12. One or more computer storage devices (612) storing computer-useable instructions that, when used by one or more computing devices (102a-n, 106, 600), cause the one or more computing devices (102a-n, 106, 600) to perform a method according to one of the claims 1 to 10.

## Patentansprüche

1. Verfahren (300), das von einem System durchgeführt wird, das einen oder mehrere Prozessoren (614) und einen oder mehrere Sensoren umfasst, die konfiguriert sind, um Sensordaten bereitzustellen, die durch den einen oder die mehreren Sensoren detektierte Benutzeraktivität widerspiegeln, wobei das Verfahren umfasst:
Auffüllen (310), unter Verwendung einer Schlafmodell-Engine, eines Interaktionsdatensatzes, der mindestens teilweise auf zuvor erfassten Interaktionsdaten basiert, die aus Sensordaten bestehen, die zu einer ersten Zeit bereitgestellt werden;
Trainieren (320), unter Verwendung der Schlafmodell-Engine, eines Benutzerschlafmodells durch Analysieren des Interaktionsdatensatzes, um ein oder mehrere schlafbezogene Merkmale und eine schlafbezogene Logik zu identifizieren, die Sensordaten zu dem einen oder den mehreren schlafbezogenen Merkmalen abbildet und logische Beziehungen zwischen dem einen oder den mehreren schlafbezogenen Merkmalen und schlafbezogenen Ableitungen definiert;
Auswerten (340) aktuell erfasster Interaktionsdaten, die aus Sensordaten bestehen, die zu einer zweiten Zeit nach der ersten Zeit bereitgestellt werden, mit dem Benutzerschlafmodell, um eine schlafbezogene Ableitung zu bestimmen;
Aktualisieren (350) eines schlafbezogenen Profils, das dem Benutzer zugeordnet ist, unter Verwendung der schlafbezogenen Ableitung, wobei das schlafbezogene Profil aus einem oder mehreren schlafbezogenen Aspekten eines Schlafmusters besteht, wobei der eine oder die mehreren schlafbezogenen Aspekte eine Vorhersage für eine zukünftige Zeit von einem oder mehreren von einer Schlafzeit oder einer Aufwachzeit umfassen, wobei der eine oder die mehreren schlafbezogenen Aspekte des Schlafmusters von mindestens einer von einer Anwendung auf einem mobilen Gerät des Benutzers und einem Client-seitigen Gerät des Benutzers, das Automatisierungsfunktionen aufweist, verwendet werden;
Identifizieren der schlafbezogenen Ableitung als eine Ausreißerableitung unter Verwendung eines vorab bestimmten Grenzwerts;
Bestimmen von Interaktionsdaten, die einem bestimmten geografischen Standort zugeordnet sind;
Speichern von Daten, die der Ausreißerableitung zugeordnet sind, und der Interaktionsdaten, die dem bestimmten geografischen Standort zugeordnet sind, in einem Ausreißerdatensatz;
Trainieren eines alternativen Benutzerschlafmodells unter Verwendung des Ausreißerdatensatzes, um ein alternatives schlafbezogenes Profil zu erzeugen, das dem bestimmten geografischen Standort für den Benutzer zugeordnet ist, wobei das alternative schlafbezogene Profil schlafbezogene Aspekte für den Benutzer umfasst, die für den bestimmten geografischen Standort spezifisch sind.

2. Verfahren nach Anspruch 1, wobei die Anwendung auf dem mobilen Gerät des Benutzers zur Verwendung des einen oder der mehreren schlafbezogenen Aspekte des Schlafmusters eine Anwendung ist, die Toneinstellungen während der vorhergesagten Schlafzeit des Benutzers steuert.

3. Verfahren nach Anspruch 1, wobei die Anwendung auf dem Mobilgerät des Benutzers zum Verwenden des einen oder der mehreren schlafbezogenen Aspekte des Schlafmusters eine Anwendung ist, die Erinnerungen an den Benutzer sendet.

4. Verfahren nach Anspruch 1, wobei das Client-seitige Gerät des Benutzers, das Automatisierungsfunktionen zum Verwenden des einen oder der mehreren schlafbezogenen Aspekte des Schlafmusters aufweist, eine Kaffeekanne ist, die konfiguriert ist, um gemäß einer vorhergesagten Aufwachzeit aktiviert zu werden.

5. Verfahren nach Anspruch 1, wobei die Sensordaten Sitzungsdaten umfassen, die Online-Aktivität des Benutzers widerspiegeln.

6. Verfahren nach Anspruch 1, wobei die Sensordaten Benutzeraktivitäten umfassen, die auf mehr als einem Benutzergerät auftreten.

7. Verfahren nach Anspruch 1, wobei die Sensordaten Kommunikationsereignissen zugeordnete Benutzerdaten umfassen.

8. Verfahren nach Anspruch 1, wobei der Interaktionsdatensatz mit zuvor erfassten Interaktionsdaten von mehreren Benutzern gefüllt wird, die einem Crowdsourcing-Interaktionsdatensatz zugeordnet sind.

9. Verfahren nach Anspruch 8, wobei zuvor erfasste Interaktionsdaten aus dem Crowdsourcing-Interaktionsdatensatz gefiltert werden, bevor der Interaktionsdatensatz unter Verwendung mindestens eines Benutzerattributfilters gefüllt wird.

10. Verfahren nach Anspruch 1, wobei das Training (320) des Benutzerschlafmodells ferner das Analysieren des Interaktionsdatensatzes umfasst, um mindestens eine schlafbezogene Gewichtung für das eine oder die mehreren schlafbezogenen Merkmale zuzuweisen, die eine relative statistische Bedeutung des entsprechenden schlafbezogenen Merkmals beim Bestimmen der schlafbezogenen Ableitung widerspiegelt.

11. Computergestütztes System (102a-n, 106, 600), umfassend:
einen oder mehrere Sensoren, die konfiguriert sind, um Sensordaten bereitzustellen, die durch den einen oder die mehreren Sensoren detektierte Benutzeraktivität widerspiegeln;
einen oder mehrere Prozessoren (614); und
ein oder mehrere Computerspeichermedien (612), auf denen durch einen Computer verwendbare Anweisungen gespeichert sind, die, wenn sie durch den einen oder die mehreren Prozessoren (614) verwendet werden, den einen oder die mehreren Prozessoren (614) zum Durchführen eines Verfahrens nach einem der vorstehenden Ansprüche veranlassen.

12. Ein oder mehrere Computerspeichergeräte (612), die Computer-verwendbare Anweisungen speichern, die, wenn sie durch das eine oder die mehreren Computergeräte (102a-n, 106, 600) verwendet werden, das eine oder die mehreren Computergeräte (102a-n, 106, 600) zum Durchführen eines Verfahrens nach einem der Ansprüche 1 bis 10 veranlassen.

## Revendications

1. Procédé (300) exécuté par un système comprenant un ou plusieurs processeurs (614) et un ou plusieurs capteurs configurés pour fournir des données de capteur reflétant l'activité de l'utilisateur détectée par le ou les capteurs, le procédé comprenant :
le remplissage (310), à l'aide d'un moteur de modèle de sommeil, d'un ensemble de données d'interaction basé au moins en partie sur des données d'interaction précédemment détectées constituées de données de capteur fournies à un premier instant ;
l'entraînement (320), à l'aide du moteur de modèle de sommeil, d'un modèle de sommeil d'utilisateur en analysant l'ensemble de données d'interaction pour identifier une ou plusieurs caractéristiques liées au sommeil et une logique liée au sommeil qui met en correspondance les données de capteur avec la ou les caractéristiques liées au sommeil et définit des relations logiques entre la ou les caractéristiques liées au sommeil et des inférences liées au sommeil ;
l'évaluation (340) des données d'interaction actuellement détectées constituées de données de capteur fournies à un second instant après le premier instant, avec le modèle de sommeil d'utilisateur pour déterminer une inférence liée au sommeil ;
la mise à jour (350) d'un profil lié au sommeil associé à l'utilisateur à l'aide de l'inférence liée au sommeil, le profil lié au sommeil étant composé d'un ou de plusieurs aspects liés au sommeil d'un rythme de sommeil, dans lequel le ou les aspects liés au sommeil comprennent une prédiction pour une heure future d'une ou plusieurs heures parmi une heure de coucher ou de réveil, le ou les aspects liés au sommeil du rythme de sommeil devant être utilisés par au moins un élément parmi une application sur un dispositif mobile de l'utilisateur et un dispositif côté client de l'utilisateur ayant des capacités d'automatisation ;
l'identification de l'inférence liée au sommeil en tant qu'inférence de valeurs aberrantes à l'aide d'un seuil prédéterminé ;
la détermination de données d'interaction associées à un emplacement géographique particulier ;
la stockage de données associées à l'inférence de valeurs aberrantes et des données d'interaction associées à l'emplacement géographique particulier dans un ensemble de données de valeurs aberrantes ;
l'entraînement d'un modèle de sommeil d'utilisateur alternatif à l'aide de l'ensemble de données de valeurs aberrantes pour générer un profil lié au sommeil alternatif associé à l'emplacement géographique particulier pour l'utilisateur, le profil lié au sommeil alternatif comprenant des aspects liés au sommeil pour l'utilisateur qui sont spécifiques à l'emplacement géographique particulier.

2. Procédé selon la revendication 1, dans lequel l'application sur le dispositif mobile de l'utilisateur pour utiliser le ou les aspects liés au sommeil du rythme de sommeil est une application réglant des paramètres sonores pendant la durée de sommeil prédite de l'utilisateur.

3. Procédé selon la revendication 1, dans lequel l'application sur le dispositif mobile de l'utilisateur pour utiliser le ou les aspects liés au sommeil du rythme de sommeil est une application envoyant des rappels à l'utilisateur.

4. Procédé selon la revendication 1, dans lequel le dispositif côté client de l'utilisateur ayant des capacités d'automatisation pour utiliser le ou les aspects liés au sommeil du rythme de sommeil est une cafetière conçue pour être activée en fonction d'une heure de réveil prédite.

5. Procédé selon la revendication 1, dans lequel les données de capteur comprennent des données de session reflétant l'activité en ligne de l'utilisateur.

6. Procédé selon la revendication 1, dans lequel les données de capteur comprennent une activité d'utilisateur se produisant sur plus d'un dispositif utilisateur.

7. Procédé selon la revendication 1, dans lequel les données de capteur comprennent des données d'utilisateur associées à des événements de communication.

8. Procédé selon la revendication 1, dans lequel l'ensemble de données d'interaction est rempli avec des données d'interaction précédemment détectées provenant de multiples utilisateurs associés à un ensemble de données d'interaction provenant de sources multiples.

9. Procédé selon la revendication 8, dans lequel les données d'interaction précédemment détectées provenant de l'ensemble de données d'interaction provenant de sources multiples sont filtrées avant de remplir l'ensemble de données d'interaction à l'aide d'au moins un filtre d'attribut d'utilisateur.

10. Procédé selon la revendication 1, dans lequel l'entraînement (320) du modèle de sommeil d'utilisateur est en outre constitué de l'analyse de l'ensemble de données d'interaction pour attribuer au moins un poids lié au sommeil pour la ou les caractéristiques liées au sommeil qui reflète une signification statistique relative de caractéristiques liées au sommeil correspondantes dans la détermination de l'inférence liée au sommeil.

11. Système informatisé (102a-n, 106, 600) comprenant :
un ou plusieurs capteurs configurés pour fournir des données de capteur reflétant une activité d'utilisateur détectée par le ou les capteurs ;
un ou plusieurs processeurs (614) ; et
un ou plusieurs supports de stockage d'ordinateur (612) stockant des instructions utilisables par ordinateur qui, lorsqu'elles sont utilisées par le ou les processeurs (614), amènent le ou les processeurs (614) à exécuter un procédé selon l'une quelconque des revendications précédentes.

12. Un ou plusieurs dispositifs de stockage d'ordinateur (612) stockant des instructions utilisables par ordinateur qui, lorsqu'elles sont utilisées par un ou plusieurs dispositifs informatiques (102a-n, 106, 600), amènent le ou les dispositifs informatiques (102a-n, 106, 600) à mettre en oeuvre un procédé selon l'une des revendications 1 à 10.
